# EUROPÄISCHE PATENTSCHRIFT

(11) **EP 2 563 694 B1**
(45) Veröffentlichungstag und Bekanntmachung des Hinweises auf die Patenterteilung: **02.03.2016**
(21) Anmeldenummer: 12723372.4
(22) Anmeldetag: 27.04.2012
(51) Int. Cl.: B65G 15/02, B65G 15/60, B65G 21/16, B65G 39/12

(54) **KURVENGURTFÖRDERER**
CURVED BELT CONVEYOR
TRANSPORTEUR À BANDE COURBÉE

(30) Priorität: 29.04.2011 DE 102011100043
(43) Veröffentlichungstag der Anmeldung: 06.03.2013
(73) Patentinhaber: Interroll Holding AG, 6592 Sant' Antonino (CH)
(72) Erfinder: HAGMAIER, Christian, 74889 Sinsheim-Reihen (DE)
(74) Vertreter: Müller-Boré & Partner Patentanwälte PartG mbB
(86) Internationale Anmeldenummer: PCT/EP2012/001829
(87) Internationale Veröffentlichungsnummer: WO 2012/146388

(56) Entgegenhaltungen:
- DE-A1- 2 020 434
- DE-A1- 19 515 631
- US-A- 3 951 256
- US-A- 5 860 512

## Beschreibung

Die vorliegende Erfindung betrifft einen Kurvengurtförderer.

Bei einem Kurvengurtförderer wird üblicherweise ein einem Kurvenverlauf angepasstes Förderband bzw. Endlosband umlaufend angetrieben, indem das Endlosband um Umlenkrollen herumgeführt wird, wobei die Drehachsen der Umlenkrollen in einem Winkel zueinander angeordnet sind. Dabei wird zumindest eine Umlenkrolle angetrieben, so dass ein lasttragendes Obertrum des Endlosbands in Förderrichtung läuft, während ein Untertrum auf der Unterseite in die entgegengesetzte Richtung läuft. Ein auf das Endlosband gelegtes Fördergut kann so um eine Kurve herum gefördert werden. Meist werden Kurvenwinkel von 90° oder 180° mittels mehrerer Kurvensegmente angetriebener Endlosbänder realisiert.

Dadurch, dass die Drehachsen der Umlenkrollen in einem Winkel zueinander angeordnet sind, weisen die durch den Antrieb auf das Endlosband wirkenden Kräfte eine Komponente quer zur Förderrichtung auf. Diese Kräfte quer zur Förderrichtung ziehen das Endlosband auf den Umlenkrollen zur Kurveninnenseite.

Um ein Verrutschen des Endlosbandes zur Kurveninnenseite zu verhindern, kann gemäß WO 2009/141157 A der kurvenäußere Rand des Endlosbandes auf der den Rollen zugewandten Seite umlaufend mit einem Keilriemen versehen werden. Entlang des kurvenäußeren Rahmens des Kurvengurtförders angeordnete Spannrollen stehen mit den abgeschrägten Seitenflächen des Keilriemens im Eingriff und üben eine Abstützkraft auf das Endlosband aus, um das Endlosband in Position zu halten. Um zu verhindern, dass der Keilriemen von den Spannrollen springt, müssen zusätzlich Anpressrollen oder Niederhalter pro Spannrolle vorgesehen werden, welche das Endlosband im Bereich des Keilriemens von oben, also von der den Umlenkrollen abgewandten Seite, nach unten pressen. Diese Anpressrollen stehen vom kurvenäußeren Rahmen des Kurvengurtförderers hervor und schmälern die nutzbare Förderfläche des Endlosbandes.

Gemäß EP 1 529 008 B1 können störende Spannvorrichtungen am kurvenäußeren Rahmen des Kurvengurtförderes vermieden werden, indem ein Bereich der Umlenkrollen ballig ausgeführt wird, oder indem zusätzliche Führungsrollen zwischen benachbarten Gurtrollen im Untertrum angeordnet werden, um die nötigen Abstützkräfte für das Endlosband aufzubringen. Somit wird die komplette Oberfläche des Endlosbandes nutzbar. Jedoch können mit einer solchen Konstruktion, bedingt durch die aufbringbare Abstützkraft, nur geringe Kurvenwinkel pro Endlosband realisiert werden.

DE 195 15 631 A1 offenbart einen Kurvenförderer mit einem Förderband, wobei das Förderband im Kurvenbereich auf Rollen gelagert ist und sich die Achslinien der zueinander in gleichmäßigen Winkelabständen angeordneten Rollen im Kurvenmittelpunkt schneiden, wobei die Rollen konisch ausgebildet sind. Das Förderband hat nahe seiner Stirnseiten an seiner Unterseite eine Keilleiste mit einer schräg zur Oberseite angeordneten Abstützfläche, wobei an der Oberseite des Förderbands nahe der Stirnseiten eine Führung in Form eines Wälzlagers angeordnet ist, welches das Förderband gegen die Mantelfläche der Rollen druckbeaufschlagt, und wobei die Abstützfläche an den der Kurvenaußenseite zugewandten Stirnseiten der Rollen anliegt.

Es ist somit Aufgabe der vorliegenden Erfindung, einen Kurvengurtförderer bereitzustellen, der die Nutzung der kompletten Auflagefläche des Endlosbandes bei großen Kurvenwinkeln pro Endlosband ermöglicht.

Diese Aufgabe wird durch den Kurvengurtförderer gemäß dem unabhängigen Anspruch gelöst. Bevorzugte Ausführungsformen ergeben sich aus den abhängigen Ansprüchen.

Ein Aspekt zur Lösung der Aufgabe betrifft einen Kurvengurtförderer mit zumindest einem entlang einer Kurve verlaufenden und über zwei Umlenkrollen geführten Endlosband, wobei das Endlosband kurvenaußenseitig eine sich kontinuierlich entlang einer Gurtkante des Endlosbandes verlaufende wulstartige Verdickung aufweist, wobei Stützmittel zum Abstützen des Endlosbandes in Richtung der Kurvenaußenseite ausschließlich innerhalb des Endlosbandes angeordnet sind, und wobei die Stützmittel im Bereich kurvenaußenseitiger Stirnflächen der Umlenkrollen an der wulstartigen Verdickung angreifen.

Entlang einer Kurve verlaufendes Endlosband kann hierbei bedeuten, dass das Endlosband dem Kurvenverlauf des Kurvengurtförderers angepasst ist, und die Oberfläche bzw. Auflagefläche des Endlosbandes um eine Kurve verläuft, um Fördergüter um eine Kurve herum fördern zu können. Die Kurve kann in der horizontalen Ebene verlaufen. Bei der Kurve kann es sich um ein Kreissegment handeln, aber auch um eine beliebige freie Kurve. Im dem Fall, dass es sich bei der Kurve um ein Kreissegment handelt, kann das Endlosband ebenfalls in der aufgespannten Position die Form eines Kreissegmentes mit einem inneren Radius und einem äußeren Radius haben, wobei die Differenz der äußeren und inneren Radii die Breite des Endlosbandes quer zur Förderrichtung darstellt. In anderen Worten kann es sich bei der Oberfläche des Endlosbandes um eine Kegeloberfläche zwischen zwei parallelen Ebenen senkrecht zur Kegelachse handeln. Bei dem Endlosband kann es sich um einen quersteifen Gurt handeln, dessen Enden miteinander verbunden bzw. vernäht und/oder verklebt sind. Das Endlosband kann auch als Endlosgurtschlaufe bezeichnet werden.

Die kontinuierlich entlang der Gurtkante des Endlosbandes verlaufende wulstartige Verdickung kann bereits bei der Herstellung des Endlosbandes integral mit dem Endlosband ausgeführt werden. Die wulstartige Verdickung kann jedoch auch nachträglich durch Verkleben und/oder Vernähen mit dem Endlosband verbunden werden. Die wulstartige Verdickung kann ausschließlich an der Unterseite des Endlosbandes, also der den Umlenkrollen zugewandten Seite, angeordnet sein. Inanderen Worten ist die wulstartige Verdickung innerhalb des Endlosbandes angeordnet, bzw. ragt ins Innere des Endlosbandes heraus. Mit dem Inneren des Endlosbandes ist der Bereich bzw. der Raum gemeint, der durch die Schlaufe, welche durch das Endlosband gebildet wird, umschlossen ist. Die Gurtkante des Endlosbandes mit der wulstartigen Verdickung steht zudem in Breitenrichtung quer zur Förderichtung vom kurvenaußenseitigen Ende bzw. von der kurvenaußenseitigen Kante der Umlenkrollen hervor, d.h. die wulstartige Verdickung liegt nicht auf der Umlenkrolle auf. Die wulstartige Verdickung kann aus Kunststoffmaterial hergestellt sein und kann flache, zur Senkrechten leicht geneigte Seitenflächen aufweisen, wobei die Breite der wulstartigen Verdickung quer zur Längsachse der wulstartigen Verdickung vom Endlosband zur Spitze der wulstartigen Verdickung hin abnimmt.

Die wulstartige Verdickung kann auch als Keilleiste ausgeführt sein.

Dadurch, dass die Stützmittel zum Abstützen des Endlosbandes in Richtung der Kurvenaußenseite ausschließlich innerhalb des Endlosbandes angeordnet sind, kann die Auflagefläche des Endlosbandes über die gesamte Gurtbreite nutzbar gemacht werden. In anderen Worten sind alle Stützmittel zum Abstützen des Endlosbandes in Richtung der Kurvenaußenseite in dem Bereich bzw. Raum angeordnet, der durch das Endlosband umschlossen ist. Stützmittel zum Abstützen des Endlosbandes in Richtung der Kurvenaußenseite können hierbei Mittel sein, die ein Verrutschen des Endlosbandes auf den Umlenkrollen in Richtung der Kurveninnenseite verhindern. Hierzu können die Stützmittel Abstützkräfte auf das Endlosband in Richtung der Kurvenaußenseite ausüben. Die Stützmittel weisen keine außerhalb der Endlosgurtschlaufe angeordneten Komponenten, wie z.B. Niederhalter, auf.

Dass die Stützmittel im Bereich kurvenaußenseitiger Stirnflächen der Umlenkrollen an der wulstartigen Verdickung angreifen, bedeutet, dass die Stützmittel im Bereich der kurvenaußenseitigen Stirnflächen der Umlenkrollen angeordnet sind. Hierdurch können weitere Abstützelemente, wie z.B. am äußeren Rahmen des Kurvengurtförderers angeordnete Spannelemente oder Niederhalter, entfallen.

Die Umlenkrollen können konisch ausgebildet sein und an ihren Enden an kurveninneren und kurvenäußeren Rahmen bzw. Gestellen des Kurvengurtförderers gelagert sein. Durch die konische Ausbildung können Geschwindigkeitsunterschiede entlang der Breite des Endlosbandes ausgeglichen werden. Zusätzlich oder statt dessen können die Umlenkrollen auch eine Vielzahl von quer zur Förderrichtung nebeneinander angeordneten Wälzkörpern aufweisen, die voneinander unabhängig drehbar sein können, um Geschwindigkeitsunterschiede entlang der Breite des Endlosbandes auszugleichen. Entlang der Gurtkurve können zwischen den zwei Umlenkrollen weitere Rollen angeordnet sein, die ebenfalls konisch ausgebildet sein können und an ihren Enden an den kurveninneren und kurvenäußeren Rahmen bzw. Gestellen des Kurvengurtförderers gelagert sein können, so dass das Endlosband über die gesamte Auflagefläche rollend abgetragen wird. Die Rollen können aber auch anders als die Umlenkrollen ausgestaltet sein. Die weiteren Rollen verhindern ein Durchhängen des Endlosbandes insbesondere bei der Förderung von schwerem Fördergut. Statt weiterer Rollen können hierzu auch Platten zwischen den Umlenkrollen unter dem Endlosband angeordnet werden, auf dem das Endlosband gleitend abgetragen wird. Im Fall konisch ausgeformter Rollen bzw. Umlenkrollen können die Rollen bzw. Umlenkrollen derart angeordnet sein, dass die durch diese gebildete Auflagefläche eben bzw. horizontal ist. Das Endlosband kann über die Umlenkrolle am Ende der Auflagefläche des Endlosbandes in Förderrichtung angetrieben werden. Hierzu kann diese Umlenkrolle mit einem Motor, beispielsweise einem Elektromotor, mechanisch verbunden sein um diese anzutreiben. Der Obertrum bzw. die Auflagefläche des Endlosbandes kann also der Lasttrum sein. Es können aber auch andere bzw. weitere Rollen angetrieben werden, wie die zweite Umlenkrolle und/oder ein oder mehr der zwischen den Umlenkrollen angeordneten Rollen.

Die Stützmittel sind durch die kurvenaußenseitigen Stirnflächen der Umlenkrollen gebildet.

Dadurch, dass die Stützmittel durch die Stirnflächen der Umlenkrollen gebildet sind, kann die Notwendigkeit, jegliche separate Abstützelemente vorzusehen, entfallen. Hierbei können die kurvenaußenseitigen Stirnflächen der Umlenkrollen, insbesondere der äußere radiale Rand der Stirnflächen der Umlenkrollen bzw. die kurvenaußenseitige äußere radiale Kante der Umlenkrollen, an der wulstartigen Verdickung angreifen. So können die kurvenaußenseitigen Stirnflächen der Umlenkrollen Abstützkräfte formschlüssig über die wulstartige Verdickung auf das Endlosband übertragen. Dies wird dadurch ermöglicht, das die ins Innere des Endlosbandes herausragende wulstartige Verdickung beim Umschlingen des Endlosbandes um die Umlenkrollen im Umschlingungsbereich einen kleineren inneren Radius ausbildet als der äußere Radius der Stirnfläche der Umlenkrolle, so dass sich die wulstartige Verdickung formschlüssig an den kurvenaußenseitigen Stirnflächen der Umlenkrollen abstützt. Die Spannkraft des Endlosbandes in Förderrichtung, die das Endlosband fest auf die Umlenkrollen presst, verhindert ein Herausspringen oder Abrutschen der wulstartigen Verdickung von den Stirnflächen der Umlenkrollen.

Vorzugsweise betragen Umschlingungswinkel des Endlosbandes um die Umlenkrollen jeweils 180°.

Der Umschlingungswinkel muss hierbei nicht exakt 180° betragen, der Umschlingungwinkel kann auch 10° mehr oder weniger betragen. Bei Verwendung einer Spannrolle im Leertrum kann der Umschlingungswinkel auch 20° mehr oder weniger betragen. Durch den großen Umschlingungswinkel kann eine genügend große Auflagefläche zur Übertragung der Abstützkräfte zwischen den Stützmitteln und der wulstartigen Verdickung bereitgestellt werden.

Mindestens 95% von an der wulstartigen Verdickung angreifenden Abstützkräften werden über die kurvenäußeren Stirnseiten der Umlenkrollen übertragen.

Es ist auch möglich, dass 99% oder gar 100% der an der wulstartigen Verdickung angreifenden Abstützkräfte über die kurvenäußeren Stirnseiten der Umlenkrollen übertragen werden. Falls weitere Rollen zwischen den Umlenkrollen angeordnet sind, kann ein geringer Anteil der an der wulstartigen Verdickung angreifenden Abstützkräfte auch über die kurvenäußeren Stirnseiten dieser weiteren Rollen übertragen werden. Der Anteil ist jedoch sehr gering, da der kurvenaußenseitige Gurtrand des Endlosbandes zwischen den zwei Umlenkrollen weitgehend spannungsfrei ist. D.h. in dem Bereich zwischen den Umlenkrollen liegt der kurvenaußenseitige Randbereich des Endlosbandes nur locker auf den Rollen auf, so dass keine hohen Abstützkräfte von den kurvenaußenseitigen Stirnflächen der Rollen auf die wulstartige Verdickung übertragen werden können. Die höchsten Spannkräfte treten hingegen an den kurvenaußenseitigen Umschlingungsbereichen der beiden Umlenkrollen auf.

Die Drehachsen der dem Endlosband zugeordneten Umlenkrollen sind in einem Winkel zueinander angeordnet, wobei der Winkel zwischen 10° und 60° liegt, vorzugsweise im Bereich von 45° liegt.

Durch die hohen Abstützkräfte, die gemäß der vorliegenden Erfindung auf das Endlosband übertragen werden können, können die Drehachsen der dem Endlosband zugeordneten zwei Umlenkrollen in einem Winkel von bis zu 60° in der horizontalen Ebene zueinander angeordnet werden, ohne dass das Endlosband durch die auftretenden Querkräfte auf den Rollen verrutscht bzw. von den Rollen rutscht. Jeder beliebige Winkel zwischen 10° und 60°, 30° und 60° bzw. 30 und 45° kann realisiert werden. Insbesondere können 30°-Segmente, 45°-Segmente oder 60°-Segmente mittels des die Umlenkrollen umschließenden Endlosbandes realisiert werden. Mittels zweier Endlosbänder mit jeweils zwei Umlenkrollen, die mit einem Winkel von etwa 42° zueinander angeordnet sind, bzw. mittels dreier Endlosbänder mit jeweils zwei Umlenkrollen, die mit einem Winkel von etwa 27° zueinander angeordnet sind, kann ein Kurvengurtförderer realisiert werden, der Fördergut um eine Kurve von 90° fördern kann. Mittels dreier Endlosbänder mit jeweils zwei Umlenkrollen, die mit einem Winkel von etwa 57° zueinander angeordnet sind, kann ein Kurvengurtförderer realisiert werden, der Fördergut um eine Kurve von 180° fördern kann. Der genaue Winkel zwischen den Umlenkrollen hängt von der Dimensionierung des Kurvengurtförderers ab, und auch von der notwendigen Spannung des Endlosbandes, welche durch das Verschieben einer Umlenkrolle mittels eines Spannelements erzeugt wird.

Vorzugsweise bildet der Kurvengurtförderer einen Kurvenabschnitt aus, der einen Winkel von 90° einschließt.

Vorzugsweise umfasst der Kurvengurtförderer zwei entlang der Kurve verlaufende und über jeweils zwei Umlenkrollen geführte Endlosbänder, wobei die Drehachsen der den Endlosbändern zugeordneten Umlenkrollen jeweils in einem Winkel von 42° zueinander angeordnet sind.

Vorzugsweise umfasst der Kurvengurtförderer drei entlang der Kurve verlaufende und über jeweils zwei Umlenkrollen geführte Endlosbänder, wobei die Drehachsen der den Endlosbändern zugeordneten Umlenkrollen jeweils in einem Winkel von 27° zueinander angeordnet sind.

Die vorliegende Erfindung ist nicht auf die oben genannten Ausführungsformen beschränkt. Vielmehr können einzelne Merkmale der Ausführungsformen beliebig zu weiteren Aspekten und Ausführungsformen kombiniert werden.

Die Erfindung wird nachfolgend unter Bezugnahme auf die Figuren anhand eines Ausführungsbeispiels näher erläutert.
Figur 1 zeigt den Kurvengurtförderer in einer Schrägansicht.
Figur 2 zeigt den Kurvengurtförderer in einer Draufsicht.
Figur 3 zeigt den Querschnitt des Kurvengurtförderers entlang der Linie A - A in Figur 2.

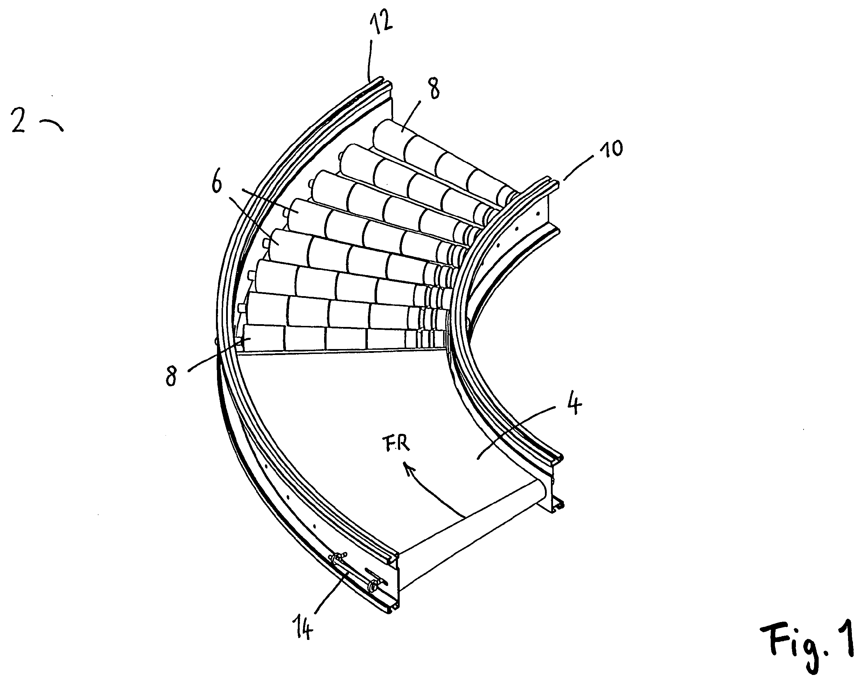

Figur 1 zeigt den Kurvengurtförderer 2 in einer Schrägansicht. Zur Veranschaulichung ist bei einem der zwei 45°-Kurvensegmente das Endlosband 4 weggelassen. Insgesamt schließt der dargestellte Kurvengurtförderer 2 einen Winkel von 90° ein. Die äußeren Umlenkrollen 8, sowie die zwischen den Umlenkrollen 8 angeordneten Rollen 6 sind an ihren Enden am kurveninneren Rahmen 10 und am kurvenäußeren Rahmen 12 drehbar gelagert. Die Rollen 6 sowie die Umlenkrollen 8 sind konisch ausgebildet, wobei diese konische Form durch vier nebeneinander angeordnete konische Wälzkörper realisiert ist, die drehbar zueinander sind. Die Spannvorrichtung 14 dient dazu, die nötige Spannkraft in Längsrichtung bzw. in Förderrichtung FR des Endlosbandes 4 aufzubringen, um das Endlosband 4 sicher antreiben zu können und Fördergut fördern zu können. Die Spannkraft wird aufgebracht, indem mittels der Spannvorrichtung 14 die nicht angetriebene Umlenkrolle entgegen der Förderrichtung FR verschoben wird.

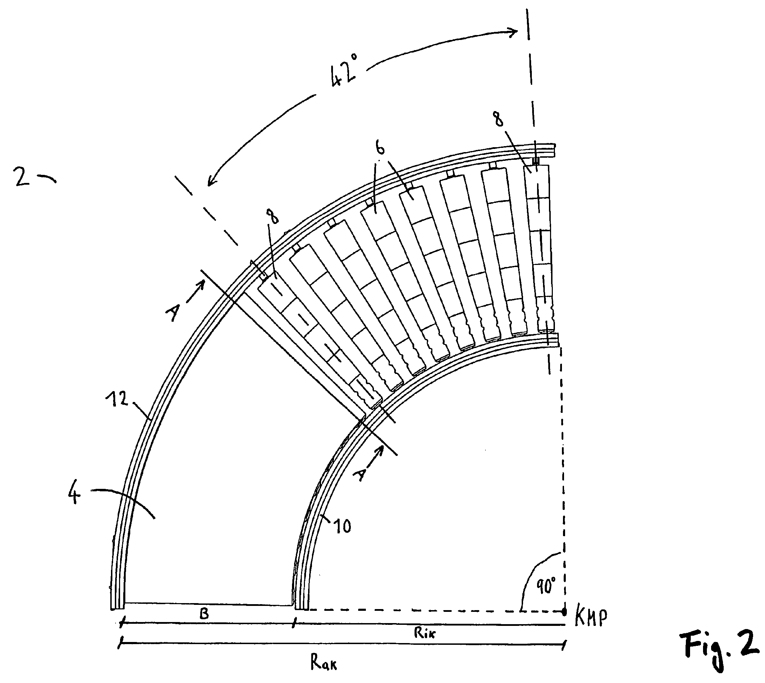

Figur 2 zeigt den Kurvengurtförderer 2 aus Figur 1 in der Draufsicht. Der Kurvengurtförderer 2 bzw. der kurveninnere und -äußere Rahmen 10, 12 des Kurvengurtförderers 2 bilden ein 90°-Kreissegment mit dem Kreismittelpunkt KMP aus. Das den Zwischenbereich zwischen dem kurveninneren und-äußeren Rahmen 10, 12 im wesentlichen abdeckende Endlosband 4 weist ebenfalls die Form eines Kreissegments mit dem Kreismittelpunkt KMP auf. Die Differenz des äußeren Radius Rak des Endlosbandes und des inneren Radius Rik des Endlosbandes ist die Breite B des Endlosbandes. Die Drehachsen der Umlenkrollen 8, 8 sind ein einem Winkel von etwa 42° zueinander angeordnet, so dass zwei jeweils um zwei Umlenkrollen gespannte Endlosbänder neben- bzw. aneinandergereiht einen Winkel von 90° einschließen können. Dabei verbleibt ein kleiner Spalt zwischen den zwei Endlosbändern.

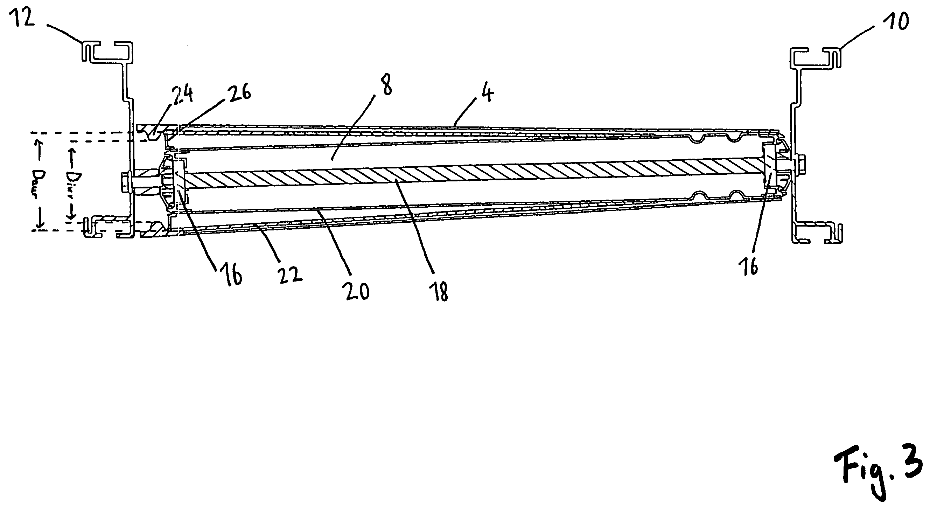

Figur 3 zeigt den Querschnitt des Kurvengurtförderers entlang der Linie A - A in Figur 2. Der Schnitt A - A verläuft entlang der Drehachse einer Umlenkrolle 8. Die Umlenkrolle 8 weist eine innere Welle 18 auf und ist an seinen beiden Enden über Kugellager 16 am kurveninneren Rahmen 10 und am kurvenäußeren Rahmen 12 drehbar gelagert. Die Umlenkrolle 8 weist ferner einen inneren Zylinder 20 auf, auf den das konische äußere Rollenelement 22 aufgesteckt ist bzw. angeordnet ist. Das äußere Rollenelement kann aus einer Vielzahl von nebeneinander angeordneten konischen Wälzkörpern zusammengesetzt sein, die drehbar zueinander sein können. Das Endlosband 4 umschlingt die Umlenkrolle 8 bzw. ist auf diesen aufgespannt. Am kurvenäußeren Gurtrand bzw. an der kurvenäußeren Gurtkante weist das Endlosband 4 eine wulstartige Verdickung 24 auf. Die kurvenaußenseitige Stirnfläche 26 der Umlenkrolle 8 greift an der wulstartigen Verdickung 24 an, und überträgt formschlüssig Abstützkräfte auf das Endlosband 4, die ein Verrutschen bzw. Abrutschen des Endlosbandes 4 zur Kurveninnenseite verhindern. Die formschlüssige Übertragung der Abstützkräfte ist insbesondere möglich, da die wulstartige Verdickung 24 beim Umschlingen der Umlenkrolle 8 einen inneren Durchmesser Diwv aufweist, der kleiner ist als der äußere Durchmesser Daur der kurvenaußenseitigen Stirnfläche 26 der Umlenkrolle 8.

### Bezugszeichenliste

- 2: Kurvengurtförderer
- 4: Endlosband
- 6: Rollen
- 8: Umlenkrollen
- 10: kurveninnerer Rahmen
- 12: kurvenäußerer Rahmen
- 14: Spannvorrichtung
- FR: Förderrichtung bzw. Längsrichtung
- KMP: Kurvenmittelpunkt
- Rik: innerer Radius des Endlosbandes
- Rak: äußerer Radius des Endlosbandes
- B: Breite des Endlosbandes
- 16: Kugellager
- 18: innere Welle
- 20: innerer Zylinder
- 22: äußeres Rollenelement
- 24: wulstartige Verdickung
- 26: kurvenaußenseitige Stirnfläche der Umlenkrolle
- Diwv: innerer Durchmesser der Umschlingung der wulstartigen Verdickung
- Daur: äußerer Durchmesser der kurvenaußenseitigen Stirnfläche der Umlenkrolle

## Patentansprüche

1. Kurvengurtförderer (2) mit zumindest einem entlang einer Kurve verlaufenden und über zwei Umlenkrollen (8) geführten Endlosband (4),
wobei das Endlosband (4) kurvenaußenseitig eine sich kontinuierlich entlang einer Gurtkante des Endlosbandes (4) verlaufende, innerhalb des Endlosbandes (4) angeordnete, wulstartige Verdickung (24) aufweist,
wobei Stützmittel zum Abstützen des Endlosbandes (4) in Richtung der Kurvenaußenseite im Bereich kurvenaußenseitiger Stirnflächen (26) der Umlenkrollen (8) an der wulstartigen Verdickung (24) angreifen,
wobei die Stützmittel durch die kurvenaußenseitigen Stirnflächen (26) der Umlenkrollen (8) gebildet sind,
dadurch charakterisiert, dass
Stützmittel zum Abstützen des Endlosbandes (4) in Richtung der Kurvenaußenseite ausschließlich innerhalb des Endlosbandes (4) angeordnet sind,
wobei die Stützmittel keine außerhalb des Endlosbandes (4) angeordneten Komponenten, wie z.B. Niederhalter, aufweisen,
wobei eine Spannkraft des Endlosbandes (4) in einer Förderrichtung (FR), die das Endlosband (4) auf die Umlenkrollen (8) presst, ein Herausspringen oder Abrutschen der wulstartigen Verdickung (24) von den Stirnflächen (26) der Umlenkrollen (8) verhindert,
wobei die Spannkraft mittels einer Spannvorrichtung (14) durch Verschieben der nicht angetriebenen Umlenkrolle (8) entgegen der Förderrichtung (FR) aufgebracht wird,
wobei mindestens 95% von an der wulstartigen Verdickung (24) angreifenden Abstützkräften über die kurvenäußeren Stirnseiten (26) der Umlenkrollen (8) übertragen werden, und
wobei die Drehachsen der dem Endlosband zugeordneten Umlenkrollen (8) in einem Winkel zueinander angeordnet sind, wobei der Winkel zwischen 10° und 60° liegt.

2. Kurvengurtförderer (2) nach Anspruch 1, wobei Umschlingungswinkel des Endlosbandes (4) um die Umlenkrollen (8) jeweils 180° betragen.

3. Kurvengurtförderer (2) nach Anspruch 1 oder 2, wobei die Drehachsen der dem Endlosband zugeordneten Umlenkrollen (8) in einem Winkel zueinander angeordnet sind, wobei der Winkel in einem Bereich von 45° liegt.

4. Kurvengurtförderer (2) nach einem der vorangehenden Ansprüche, wobei
der Kurvengurtförderer (2) einen Kurvenabschnitt ausbildet, der einen Winkel von 90°einschließt.

5. Kurvengurtförderer (2) nach einem der vorangehenden Ansprüche, umfassend:
zwei entlang der Kurve verlaufende und über jeweils zwei Umlenkrollen (8) geführte Endlosbänder (4),
wobei die Drehachsen der den Endlosbändern (4) zugeordneten Umlenkrollen (8) jeweils in einem Winkel von 42° zueinander angeordnet sind.

6. Kurvengurtförderer (2) nach einem der vorangehenden Ansprüche, umfassend:
drei entlang der Kurve verlaufende und über jeweils zwei Umlenkrollen (8) geführte Endlosbänder (4),
wobei die Drehachsen der den Endlosbändern (4) zugeordneten Umlenkrollen (8) jeweils in einem Winkel von 27° zueinander angeordnet sind.

## Claims

1. A curved belt conveyor (2) with at least one continuous belt (4) running along a curve and being guided via two return rollers (8),
wherein, on the curve outer side, the continuous belt (4) has a bulging thickening (24) running continuously along a belt edge of the continuous belt (4) and arranged within the continuous belt (4),
wherein support means for supporting the continuous belt (4) in the direction of the curve outer side contact the bulging thickening (24) in the region of curve-outer-side end faces (26) of the return rollers (8),
wherein the support means are formed by the curve-outer-side end faces (26) of the return rollers (8),
**characterized in that**
support means for supporting the continuous belt (4) in the direction of the curve outer side are exclusively arranged within the continuous belt (4),
wherein the support means do not have any components, such as hold-down devices, arranged outside the continuous belt (4),
wherein a tensioning force of the continuous belt (4) in a conveying direction (FR), which presses the continuous belt (4) onto the return rollers (8), prevents the bulging thickening (24) from coming out of or slipping off from the end faces (26) of the return rollers (8),
wherein the tensioning force is applied by means of a tensioning device (14) by shifting the non-driven return roller (8) opposite to the conveying direction (FR),
wherein at least 95% of the support forces acting on the bulging thickening (24) are transferred via the curve-outer end faces (26) of the return rollers (8).
wherein the rotation axes of the return rollers (8) assigned to the continuous belt are arranged at an angle with respect to each other, the angle being between 10° and 60°.

2. The curved belt conveyor (2) according to claim 1, wherein wrap angles of the continuous belt (4) around the return rollers (8) are each 180°.

3. The curved belt conveyor (2) according to claim 1 or 2, wherein the rotation axes of the return rollers (8) assigned to the continuous belt are arranged at an angle with respect to each other, the angle being in the range of 45°.

4. The curved belt conveyor (2) according to one of the preceding claims, wherein the curved belt conveyor (2) forms a curve portion that encloses an angle of 90°.

5. The curved belt conveyor (2) according to one of the preceding claims, comprising:
two continuous belts (4) running along the curve and being guided via two return rollers (8) each,
wherein the rotation axes of the return rollers (8) assigned to the continuous belts (4) are each arranged at an angle of 42° with respect to each other.

6. The curved belt conveyor (2) according to one of the preceding claims, comprising:
three continuous belts (4) running along the curve and being guided via two return rollers (8) each,
wherein the rotation axes of the return rollers (8) assigned to the continuous belts (4) are each arranged at an angle of 27° with respect to each other.

## Revendications

1. Transporteur à bande courbée (2) avec au moins une bande sans fin (4) courant le long d'une courbe et guidée via deux poulies de renvoi (8),
dans lequel la bande sans fin (4) comporte sur le côté extérieur de la courbe un épaississement (24) en forme de bourrelet disposé au sein de la bande sans fin (4) et courant le long d'une arête de la bande sans fin (4),
dans lequel des moyens d'appui destinés à appuyer la bande sans fin (4) prennent en direction du côté extérieur de la courbe au niveau des surfaces d'about (26), situées sur le côté extérieur de la courbe, des poulies de renvoi (8) sur l'épaississement en forme de bourrelet (24),
dans lequel les moyens d'appui sont formés par les surfaces d'about (26) situées côté extérieur de la courbe des poulies de renvoi (8),
**caractérisé en ce que**
des moyens d'appui sont disposés pour appuyer la bande sans fin (4) en direction du côté extérieur de la courbe exclusivement au sein de la bande sans fin (4),
les moyens d'appui ne présentant aucune composante, telle qu'un abaisseur, disposée hors de la bande sans fin (4),
dans lequel une force de serrage de la bande sans fin (4) qui presse la bande sans fin (4) sur les poulies de renvoi (8) empêche dans un sens de transport (FR) que l'épaississement (24) en forme de bourrelet ne saute ou ne glisse des surfaces d'about (26) des poulies de renvoi (8),
dans lequel la force de serrage est exercée au moyen d'un dispositif de serrage (14) par décalage de la poulie de renvoi (8) non entraînée dans le sens opposé au sens de transport (FR),
dans lequel au moins 95 % des forces d'appui qui prennent sur l'épaississement (24) en forme de bourrelet sont transmises via les faces terminales (26) côté extérieur de la courbe des poulies de renvoi (8), et dans lequel les axes de rotation des poulies de renvoi (8) affectées à la bande sans fin sont disposés en angle l'un par rapport à l'autre, l'angle étant situé entre 10° et 60°.

2. Transporteur à bande courbée (2) selon la revendication 1, dans lequel l'angle d'enroulement de la bande sans fin (4) autour des poulies de renvoi (8) est respectivement 180°.

3. Transporteur à bande courbée (2) selon la revendication 1 ou 2, dans lequel les axes de rotation des poulies de renvoi (8) affectées à la bande sans fin sont disposés en angle l'un par rapport à l'autre, l'angle étant situé dans une plage de 45°.

4. Transporteur à bande courbée (2) selon l'une quelconque des revendications précédentes, dans lequel le transporteur à bande courbée (2) forme une section de courbe qui inclut un angle de 90°.

5. Transporteur à bande courbée (2) selon l'une quelconque des revendications précédentes, comprenant :
deux bandes sans fin (4) courant le long de la courbe et guidées chacune via deux poulies de renvoi (8),
dans lequel les axes de rotation des poulies de renvoi (8) affectées aux bandes sans fin (4) sont disposés dans un angle de 42° l'un par rapport à l'autre.

6. Transporteur à bande courbée (2) selon l'une quelconque des revendications précédentes, comprenant :
trois bandes sans fin (4) courant le long de la courbe et guidées chacune via deux poulies de renvoi (8),
dans lequel les axes de rotation des poulies de renvoi (8) affectées aux bandes sans fin (4) sont disposés dans un angle de 27° l'un par rapport à l'autre.
